# EUROPEAN PATENT APPLICATION

(11) **EP 4 269 245 A1**
(43) Date of publication of application: **01.11.2023**
(21) Application number: 23168784.9
(22) Date of filing: 19.04.2023
(51) Int. Cl.: B64D 13/06

(54) **ENVIRONMENTAL CONTROL SYSTEM AND VAPOR CONTROL SYSTEM WATER SEPARATION OVERLAP**

(30) Priority: 28.04.2022 US 202217731944
(71) Applicant: Hamilton Sundstrand Corporation, Charlotte, NC 28217-4578 (US)
(72) Inventor: RETERSDORF, Alan, Avon, CT (US)
(74) Representative: Dehns

(57) **Abstract**

An environmental control system (20) of a vehicle includes an inlet (22) configured to receive a medium, a compression device (28) fluidly connected to the inlet, and at least one heat exchanger (30) fluidly connected to the compression device. A secondary fluid system is thermally coupled to the environmental control system. The secondary fluid system has a closed loop configuration through which a secondary fluid circulates. The secondary fluid system includes an evaporator and a condenser. The evaporator has an evaporator outlet fluidly connected to and configured to receive the medium output from an outlet of the heat exchanger outlet and the condenser is connected to the evaporator outlet. The condenser is fluidly connected to and receives the medium output from the evaporator.

## Description

### BACKGROUND

Exemplary embodiments pertain to an environmental control system of an aircraft, and more particularly, to a vapor compression system thermally coupled to an environmental control system.

A typical commercial aircraft includes at least several nonintegrated cooling systems configured to provide temperature control to various regions of the aircraft. For example, an aircraft environmental control system primarily provides heating and cooling for the aircraft cabin area. In addition, a galley chiller system is dedicated to refrigerating the food carts in the galleys located throughout the aircraft. Since each system has a significant weight and power requirement, the overall efficiency of the aircraft is affected by these nonintegrated systems.

### BRIEF DESCRIPTION

According to an embodiment, an environmental control system of a vehicle includes an inlet configured to receive a medium, a compression device fluidly connected to the inlet, and at least one heat exchanger fluidly connected to the compression device. A secondary fluid system is thermally coupled to the environmental control system. The secondary fluid system has a closed loop configuration through which a secondary fluid circulates. The secondary fluid system includes an evaporator and a condenser. The evaporator has an evaporator outlet fluidly connected to and configured to receive the medium output from an outlet of the heat exchanger outlet and the condenser is connected to the evaporator outlet. The condenser is fluidly connected to and receives the medium output from the evaporator.

In addition to one or more of the features described herein, or as an alternative, in further embodiments the secondary fluid system is a vapor compression system further comprising a compressor and an expansion device.

In addition to one or more of the features described herein, or as an alternative, in further embodiments comprising a motor operably coupled to the compressor.

In addition to one or more of the features described herein, or as an alternative, in further embodiments the evaporator further comprises a secondary fluid outlet and the condenser further comprises a secondary fluid inlet, the compressor having a compressor inlet connected to the secondary fluid outlet and having a compressor outlet fluidly connected to the secondary fluid inlet.

In addition to one or more of the features described herein, or as an alternative, in further embodiments the condenser further comprises a secondary fluid outlet and the evaporator further comprises a secondary fluid inlet. The expansion device has an expansion device inlet connected to the secondary fluid outlet and has an expansion device outlet fluidly connected to the secondary fluid inlet.

In addition to one or more of the features described herein, or as an alternative, in further embodiments the secondary fluid is a refrigerant.

In addition to one or more of the features described herein, or as an alternative, in further embodiments comprising a water extractor positioned between the evaporator and the condenser relative to a flow of the medium.

In addition to one or more of the features described herein, or as an alternative, in further embodiments the medium is bleed air.

In addition to one or more of the features described herein, or as an alternative, in further embodiments the compression device further comprises a compressor, a turbine, and a shaft operably coupling the compressor and the turbine, wherein work extracted from the medium within the turbine rotates the shaft to power the compressor.

In addition to one or more of the features described herein, or as an alternative, in further embodiments the vehicle is an aircraft.

According to an embodiment, a method of operating an environmental control system includes providing a closed loop secondary fluid system through which a secondary fluid circulates. The secondary fluid system includes an evaporator and a condenser. The secondary fluid system is thermally coupled to the environmental control system. The method additionally includes cooling a medium within the evaporator of the secondary fluid system to from a cooled medium and heating the cooled medium within the condenser of the secondary fluid system.

In addition to one or more of the features described herein, or as an alternative, in further embodiments cooling the medium within the evaporator further comprises transferring heat from the medium to the secondary fluid within the evaporator.

In addition to one or more of the features described herein, or as an alternative, in further embodiments heating the cooled medium within the condenser further comprises transferring heat from the secondary fluid to the cooled medium within the condenser.

In addition to one or more of the features described herein, or as an alternative, in further embodiments a temperature of the cooled medium output from the evaporator is generally 0°C.

In addition to one or more of the features described herein, or as an alternative, in further embodiments comprising removing water from the cooled medium to form a dry medium prior to heating the cooled medium.

In addition to one or more of the features described herein, or as an alternative, in further embodiments removing water from the cooled medium further comprises providing the cooled medium output from the evaporator to a water extractor.

In addition to one or more of the features described herein, or as an alternative, in further embodiments the medium is bleed air.

In addition to one or more of the features described herein, or as an alternative, in further embodiments the secondary fluid system is a vapor compression system.

In addition to one or more of the features described herein, or as an alternative, in further embodiments the secondary fluid is refrigerant.

### BRIEF DESCRIPTION OF THE DRAWINGS

The following descriptions should not be considered limiting in any way. With reference to the accompanying drawings, like elements are numbered alike:
FIG. 1 is a schematic diagram of a prior art environmental control system of an aircraft; and
FIG. 2 is a schematic diagram of an environmental control system mechanically and thermally coupled to a secondary fluid system according to an embodiment.

### DETAILED DESCRIPTION

A detailed description of one or more embodiments of the disclosed apparatus and method are presented herein by way of exemplification and not limitation with reference to the Figures.

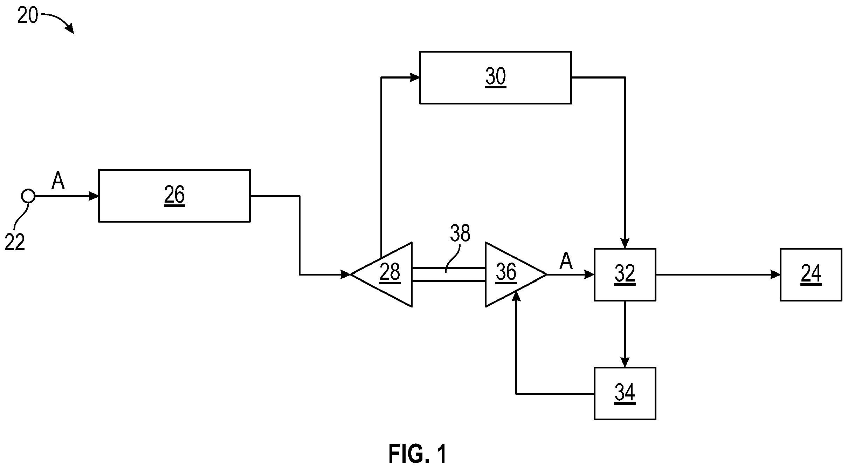

With reference now to the FIG. 1, an example of a schematic diagram of a portion of an existing environment control system (ECS) 20, such as an air conditioning unit or pack for example, is depicted according to a non-limiting embodiment. Although the environmental control system 20 is described with reference to an aircraft, alternative applications, such as another vehicle for example, are also within the scope of the disclosure. As shown, the ECS 20 may be configured to receive a medium A at an inlet 22 and provide a conditioned form of the medium A to one or more loads 24. In embodiments where the ECS 20 is used in an aircraft application, the medium A may be bleed air, which is pressurized air originating from, i.e., being "bled" from, an engine or auxiliary power unit of the aircraft. It shall be understood that one or more of the temperature, humidity, and pressure of the bleed air can vary based upon the compressor stage and revolutions per minute of the engine or auxiliary power unit from which the air is drawn. However, embodiments where the medium A is alternatively or additionally provided from another source are also contemplated. For example, the medium A may be fresh or ambient air such as procured via one or more scooping mechanisms and/or may be cabin air provided from a volume of the aircraft, such as the cabin.

Downstream from the inlet 22, the environmental control system 20 includes at least one heat exchanger. As shown, the medium A may be cooled within a precooler or a first heat exchanger 26 prior to being delivered to a compressor 28. A compressor, such as compressor 28 is a mechanical device configured to raise a pressure of a medium and can be driven by another mechanical device (e.g., a motor or a medium via a turbine). Examples of compressor types include centrifugal, diagonal or mixed-flow, axial-flow, reciprocating, ionic liquid piston, rotary screw, rotary vane, scroll, diaphragm, air bubble, etc. Within the compressor 28, the temperature and pressure of the medium A are increased. From the outlet of the compressor 28, the medium A flows to a second heat exchanger 30, within which the medium A is cooled. The cooled, compressed medium A output from the second heat exchanger 30 may then be provided to a condenser 32 and to a water extractor 34 in series, to condense and to remove the moisture therefrom, respectively.

From the water extractor 34, the warm, dry medium A is provided to an inlet of a turbine 36. A turbine, such as turbine 36 for example, is a mechanical device that expands a medium and extracts work therefrom (also referred to as extracting energy). Within the turbine 36, the medium A is expanded, and work is extracted therefrom which results in a cooling and depressurization of the medium A. In an embodiment, the turbine 36 and the compressor 28 are operably coupled to one another by a shaft 38. In such an embodiment, the turbine 36 and the compressor 28 in combination may be referred to as a compression device, such as an air cycle machine.

The further cooled, reduced pressure medium A output from the turbine 36 may then be provided as a secondary flow to the condenser 32. As the secondary flow, the medium A is reheated prior to being delivered to one or more loads 24 of the aircraft, such as the cabin or cockpit for example. It should be understood that the ECS 20 illustrated and described herein is intended as an example only and that an ECS 20 having any suitable configuration is within the scope of the disclosure. Further, an ECS 20 configured to receive a plurality of mediums and deliver a conditioned form of one or more of those mediums to a load is also contemplated herein.

Because the size and weight of each component of an aircraft is of particular importance, there exists a need to optimize the efficiency of each of the components of the environmental control system 20. In an embodiment, enhanced cooling and water removal may be achieved by using a secondary fluid system 40 to cool and reheat the medium A rather than using a partially conditioned flow of the medium A within the condenser 32.

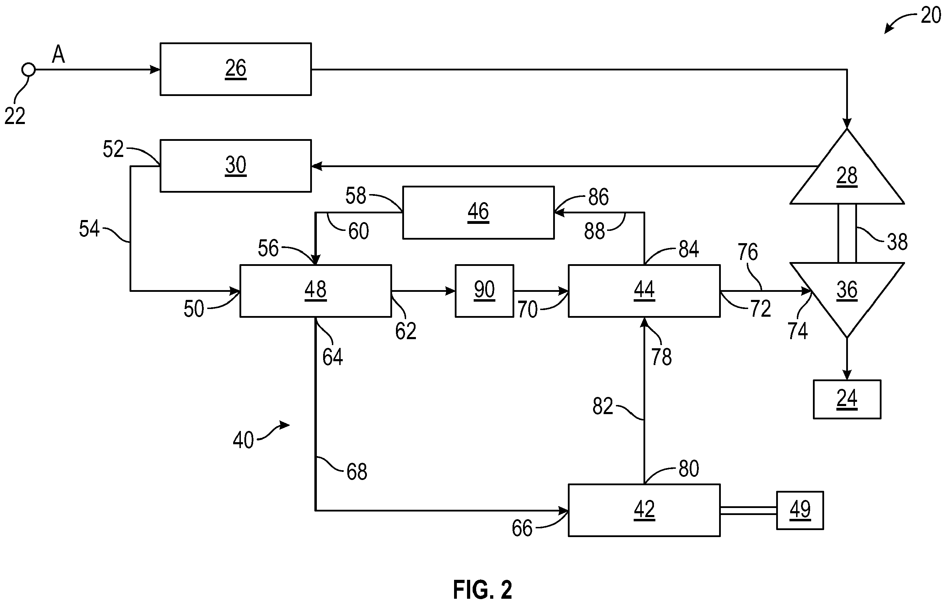

With reference now to FIG. 2, an example of an environmental control system 20 operably coupled to a secondary fluid system 40 is illustrated. The secondary fluid system 40 may have a closed loop configuration. In an embodiment, the secondary fluid system 40 is a vapor compression system. However, it should be understood that any suitable secondary fluid system is within the scope of the disclosure. As shown, the secondary fluid system 40 includes a compressor 42, a condenser 44 or heat rejection heat exchanger, an expansion device 46, and an evaporator 48 or heat absorption heat exchanger arranged to form a closed fluid loop. A secondary fluid R, such as a refrigerant, for example, is configured to flow from the compressor 42 to the condenser 44, expansion device 46, and evaporator 48 in series. In an embodiment, a motor 49 is operably coupled to the compressor 42 to produce work that the compressor 42 uses to compress the secondary fluid R. However, embodiments where the compressor 42 is driven alternatively or additionally by another mechanism, such as by a turbine for example, are also within the scope of the disclosure.

In the illustrated, non-limiting embodiment, the environmental control system 20 is thermally coupled to both the condenser 44 and the evaporator 48 of the secondary fluid system 40. As shown, the evaporator 48 has a first medium inlet 50 in fluid communication with an outlet 52 of the second heat exchanger 30 via a conduit 54 and has a secondary fluid inlet 56 in fluid communication with an outlet 58 of the expansion device 46 via a conduit 60. The evaporator 48 similarly has a first medium outlet 62 connected to a downstream component and a second fluid outlet 64, the second fluid outlet 64 being connected to an inlet 66 of the compressor 42 by a conduit 68.

The condenser 44 of the secondary fluid system 40 has a first medium inlet 70 in fluid communication with an upstream component, and a first medium outlet 72 fluidly connected to an inlet 74 of the turbine 36 via a conduit 76. The condenser 44 further has a secondary fluid inlet 78 connected to an outlet 80 of the compressor 42 by conduit 82, and a secondary fluid outlet 84 connected to an inlet 86 of the expansion device 46 by a conduit 88. The skilled artisan will realize that the condenser 44 (as well as evaporator 48) can be any type of heat exchanger that achieves the desired result of heat transfer with respect to the medium A. For example, the condenser 44 and the evaporator 48 can be crossflow heat exchangers.

In the illustrated, non-limiting embodiment, a water extractor 90 is arranged upstream from the condenser 44 and downstream from the evaporator 48 relative to the flow of medium A. The configuration of the water extractor 90 may be substantially identical to the water extractor 34 illustrated and described with respect to FIG. 1, or alternatively, may have another configuration.

During operation of the secondary fluid system 40, a two-phase secondary fluid R within the evaporator 48 is arranged in a heat exchange relationship with the medium A of the environmental control system 20. In an embodiment, the evaporator 48 of the secondary fluid system 40 is located directly downstream from the second heat exchanger 30 relative to the flow of the medium A. Accordingly, heat from the medium A is transferred to the secondary fluid R within the evaporator 48, such that the substantial entirety of the secondary fluid R at the outlet of the evaporator 48 is a vapor.

The further cooled medium A is provided from the outlet 62 of the evaporator 48 to the water extractor 90. Within the water extractor 90, any condensed water within the medium A is extracted, resulting in a dry, cool medium A. This dry, cool medium A may then be provided to the inlet 70 of the condenser 44. At the same time, the vaporized secondary fluid R is delivered from the secondary fluid outlet 64 of the evaporator 48 to the inlet 66 of the compressor 42 through conduit 68. Within the compressor 42, the secondary fluid R is further heated and pressurized. The hot, vaporized secondary fluid R output from the outlet 80 of the compressor 42 is provided to the secondary fluid inlet 78 of the condenser 44 via conduit 82. Within the condenser 44, the secondary fluid R is arranged in a heat exchange relationship with the dry, cool medium A output from the water extractor 90. Within the condenser 44, heat is transferred from the hot vapor refrigerant to the dry cool medium A, thereby causing the hot vapor refrigerant to cool and at least partially change phase to a liquid. Additionally, any condensed water that is not removed from medium A via the water extractor 90 may evaporate in the condenser 44 such that there will not be any free moisture in medium A when it enters the turbine 36, which may prevent wear on the turbine 36.

The hot liquid secondary fluid R at the outlet 84 of the condenser 44 is then provided to inlet 86 of the expansion device 46 through conduit 88. Within the expansion device 46, pressure is removed from the liquid secondary fluid R, causing at least a portion of the secondary fluid R to change state from a higher pressure liquid to a lower pressure vapor without adding heat thereto. In the illustrated, non-limiting embodiment, the secondary fluid R provided at the outlet 58 of the expansion device 46 is a liquid and vapor mixture. The expansion device 46, the secondary fluid R is returned to the evaporator 48 to repeat the cycle.

The hot cool medium A provided at the outlet 72 of the condenser 44 is delivered to an inlet 74 of the turbine 36 of the compression device. Similar to the embodiment previously described with respect to FIG. 1, within the turbine 36, the medium A is expanded, and work is extracted therefrom which results in a cooling and depressurization of the medium A. This work extracted from the medium A within the turbine 36 is used to drive the compressor 28 via the shaft 38. The flow of medium A output from the turbine 36 may then be delivered to one or more loads 24 of the aircraft, such as the cabin or cockpit for example.

The thermal connection between the environmental control system 20 and the vapor compression system is configured to function similarly to the condenser 32 and water extractor 34 of existing environmental control systems, such as shown in FIG. 1. By using the secondary fluid system 40 to cool the medium A within the evaporator 48, the temperature of the medium A at the outlet 62 of the evaporator 48 is as close to freezing or 0°C or 32°F as is feasible. This cooling of the medium A results in better formation of water condensation, and therefore more effective water removal from the medium A within the water extractor 90.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An environmental control system (20) of a vehicle comprising:
an inlet (22) configured to receive a medium;
a compression device (28) fluidly connected to the inlet;
at least one heat exchanger (30) fluidly connected to the compression device, the at least one heat exchanger having a heat exchanger outlet (52);
a secondary fluid system (40) thermally coupled to the environmental control system, the secondary fluid system having a closed loop configuration through which a secondary fluid circulates, the secondary fluid system further comprising:
an evaporator (48) having an evaporator outlet, wherein the evaporator is fluidly connected to and receives the medium output from the heat exchanger outlet; and
a condenser (44) connected to the evaporator outlet, wherein the condenser is fluidly connected to and receives the medium output from the evaporator.

2. The environmental control system of claim 1, wherein the secondary fluid system (40) is a vapor compression system further comprising a compressor (42) and an expansion device (46); optionally
further comprising a motor (49) operably coupled to the compressor (42).

3. The environmental control system of claim 2, wherein the evaporator (48) further comprises a secondary fluid outlet (64) and the condenser (44) further comprises a secondary fluid inlet (78), the compressor (42) having a compressor inlet (66) connected to the secondary fluid outlet and having a compressor outlet (80) fluidly connected to the secondary fluid inlet (78).

4. The environmental control system of any of claims 2 or 3, wherein the condenser (44) further comprises a secondary fluid outlet (84) and the evaporator (48) further comprises a secondary fluid inlet (56), the expansion device (46) having an expansion device inlet (86) connected to the secondary fluid outlet and having an expansion device outlet (58) fluidly connected to the secondary fluid inlet.

5. The environmental control system of any preceding claim, wherein the secondary fluid is a refrigerant.

6. The environmental control system of any preceding claim, further comprising a water extractor (90) positioned between the evaporator (48) and the condenser (44) relative to a flow of the medium.

7. The environmental control system of any preceding claim, wherein the medium is bleed air.

8. The environmental control system of any preceding claim, wherein the compression device (28) further comprises a compressor (28), a turbine (36), and a shaft (38) operably coupling the compressor and the turbine, wherein work extracted from the medium within the turbine rotates the shaft to power the compressor.

9. The environmental control system of any preceding claim, wherein the vehicle is an aircraft.

10. A method of operating an environmental control system (20) comprising:
providing a closed loop secondary fluid system (40) through which a secondary fluid circulates, the secondary fluid system including an evaporator (48) and a condenser (44), the secondary fluid system being thermally coupled to the environmental control system;
cooling a medium within the evaporator of the secondary fluid system to from a cooled medium; and
heating the cooled medium within the condenser of the secondary fluid system.

11. The method of claim 10, wherein cooling the medium within the evaporator (48) further comprises transferring heat from the medium to the secondary fluid within the evaporator, and/or
wherein heating the cooled medium within the condenser further comprises transferring heat from the secondary fluid to the cooled medium within the condenser.

12. The method of claim 10 or 11, wherein a temperature of the cooled medium output from the evaporator is generally 0°C.

13. The method of any of claims 10 to 12, further comprising removing water from the cooled medium to form a dry medium prior to heating the cooled medium; optionally
wherein removing water from the cooled medium further comprises providing the cooled medium output from the evaporator to a water extractor.

14. The method of any of claims 10 to 13, wherein the medium is bleed air.

15. The method of any of claims 10 to 14,
wherein the secondary fluid system is a vapor compression system; and/or
wherein the secondary fluid is refrigerant.
